# EUROPÄISCHE PATENTSCHRIFT

(11) **EP 1 474 693 B1**
(45) Veröffentlichungstag und Bekanntmachung des Hinweises auf die Patenterteilung: **09.01.2013**
(21) Anmeldenummer: 02796499.8
(22) Anmeldetag: 12.11.2002
(51) Int. Cl.: G01P 1/00

(54) **HANDGEFÜHRTES GERÄT**
HAND-OPERATED DEVICE
APPAREIL MANUEL

(30) Priorität: 07.02.2002 DE 10205001
(43) Veröffentlichungstag der Anmeldung: 10.11.2004
(73) Patentinhaber: ROBERT BOSCH GMBH, 70442 Stuttgart (DE)
(72) Erfinder: HOFFMANN, Erhard, 70771 Leinfelden-Echterdingen (DE); CLAUSS, Stefan, 70771 Leinfelden-Echterdingen (DE); SKULTETY-BETZ, Uwe, 70771 Leinfelden-Echterdingen (DE); HAASE, Bjoern, 70182 Stuttgart (DE); HOFFMANN, Ulli, 75223 Nieffern-Oeschelbronn (DE)
(86) Internationale Anmeldenummer: PCT/DE2002/004169
(87) Internationale Veröffentlichungsnummer: WO 2003/067264

(56) Entgegenhaltungen:
- DE-A- 4 122 398
- DE-C- 4 323 182
- US-A1- 2001 052 581
- PATENT ABSTRACTS OF JAPAN Bd. 1996, Nr. 09, 30. September 1996 (1996-09-30) & JP 8 114439 A (NIPPONDENSO CO LTD), 7. Mai 1996 (1996-05-07)
- PATENT ABSTRACTS OF JAPAN Bd. 0172, Nr. 56 (M-1413), 20. Mai 1993 (1993-05-20) & JP 4 372409 A (KAYABA IND CO LTD), 25. Dezember 1992 (1992-12-25)

## Beschreibung

### Stand der Technik

Die Erfindung geht aus von einem handgeführten Gerät nach dem Oberbegriff des Anspruchs 1.

Es ist ein handgeführtes Ortungsgerät bekannt, das ein Fahrwerk mit vier Rädern aufweist, wobei jeweils zwei Räder an einer Längsseite des Ortungsgeräts angebracht sind. Die sich gegenüberliegenden Räder sind jeweils über eine sich senkrecht zur Längserstreckung des Ortungsgeräts verlaufende Achse verbunden. Das Ortungsgerät besitzt an einer Oberseite seines Gehäuses eine sich in Richtung der Längserstreckung verlaufende Halteeinheit, mit der das Ortungsgerät mit Laufflächen der Räder auf einer Fläche eines Untersuchungsgegenstands in Richtung seiner Längserstreckung verfahrbar ist.

Zur Aufnahme einer Bewegungskenngröße mittels einer Sensoreinheit sind die beiden starren Achsen und die Sensoreinheit über einen Zahnriemen mechanisch gekoppelt.

### Vorteile der Erfindung

Die Erfindung geht aus von einem handgeführten Gerät, insbesondere von einem Ortungsgerät, mit einem Gehäuse, das mit einer Halteeinheit über eine Fläche eines Untersuchungsgegenstands bewegbar ist und das eine Sensoreinheit zur Aufnahme von einer ersten Bewegungskenngröße aufweist.

Es wird vorgeschlagen, daß mit der Sensoreinheit zumindest eine zweite Bewegungskenngröße erfaßbar ist. Vorteilhaft können zusätzliche Informationen erfaßt werden, wie z.B. Informationen über einen Abstand des Gehäuses zur Fläche des Untersuchungsgegenstands und/oder Informationen über eine Bewegung des Gehäuses auf einer Kurvenbahn usw. Meßergebnisse können mit den zusätzlichen Informationen korrigiert und Meßfehler können vorteilhaft zumindest reduziert werden, und zwar insbesondere indem die Bewegungskenngrößen miteinander verglichen werden. Ferner können Meßfehler, insbesondere die durch eine unbeabsichtigte Änderung einer Bewegungsrichtung entstehende Fehler, über eine Anzeige angezeigt und manuell und/oder automatisch über Aktuatoren korrigiert werden. Zudem kann bei einem Ausfall der Sensoreinheit hinsichtlich der Erfassung der ersten Bewegungskenngröße mit der zweiten Bewegungskenngröße ein zumindest teilweise verwertbares Meßergebnis erreicht werden, und zwar insbesondere, wenn die zweite Bewegungskenngröße der ersten Bewegungskenngröße von der Art her entspricht.

Ist aus den erfaßten Bewegungskenngrößen eine Kenngröße für eine Drehbewegung des Gehäuses um zumindest eine Achse ermittelbar, kann einfach auf eine ungewünschte Bewegung des Gehäuses geschlossen werden, und zwar insbesondere, wenn sich die Achse in Richtung der Normalen der Fläche des Untersuchungsgegenstands erstreckt.

In einer weiteren Ausgestaltung der Erfindung wird vorgeschlagen, daß die Sensoreinheit wenigstens zwei Sensoren aufweist. Vorteilhaft kann mit Standardbauteilen eine konstruktiv einfache und kostengünstige Vorrichtung erreicht werden, mit der gleichzeitig zwei Bewegungskenngrößen erfaßbar sind.

Vorteilhaft sind die Sensoren zumindest teilweise von elektronischen Bauteilen gebildet. Es können platzsparende, kostengünstige und genaue Sensoren verwendet werden, deren Signale in elektronischer Form ausgebbar sind und einfach elektronisch weiterverarbeitet werden können. Die Bewegungskenngrößen können über Berührungskontakte oder berührungslos erfaßt werden. Werden die Bewegungskenngrößen berührungslos erfaßt, kann vorteilhaft eine Reibung zwischen korrespondierenden Bauteilen vermieden werden und ein Komfort für einen Bediener kann erhöht werden: Die Sensoren zur berührungslosen Erfassung können auf verschiedene, dem Fachmann als sinnvoll erscheinende Eingangsgrößen ausgelegt sein, wie beispielsweise auf magnetische, elektrische, optische und/oder thermische Eingangsgrößen.

In einer weiteren Ausgestaltung der Erfindung wird vorgeschlagen, daß die Sensoreinheit zumindest einen optoelektronischen Sensor aufweist, über den zumindest eine der beiden Bewegungskenngrößen berührungslos von der Fläche des Untersuchungsgegenstands erfaßbar ist. Vorteilhaft ist ein besonders komfortabler Meßvorgang erreichbar, bei dem das Gehäuse berührungslos auf unterschiedlichen Bewegungsbahnen über die Fläche des Untersuchungsgegenstands bewegt werden kann, wie z.B. auf einer geraden Bahn, auf einer gekrümmten Bahn mit einer Wischbewegung oder auf einer Kreisbahn usw.

Ferner wird vorgeschlagen, daß am Gehäuse ein Fahrwerk mit zumindest einem ersten Wälzkörper angeordnet ist, über den zumindest die erste Bewegungskenngröße erfaßbar ist. Vorteilhaft kann die erste Bewegungskenngröße konstruktiv einfach und kostengünstig über eine Abwälzbewegung des Wälzkörpers auf der Fläche des Untersuchungsgegenstands ermittelt werden.

Weist das Fahrwerk zumindest einen zweiten Wälzkörper auf, über den zumindest die zweite Bewegungskenngröße erfaßbar ist, kann konstruktiv einfach ein Handhabungsfehler des Bedieners erfaßt werden, und zwar indem die Bewegungskenngrößen der beiden Wälzkörper, insbesondere die Drehgeschwindigkeiten, miteinander verglichen werden. Ferner kann zumindest ein Wälzkörper über einen Aktuator gesteuert bzw. gebremst oder beschleunigt werden, um bei unterschiedlichen Bewegungskenngrößen der beiden Wälzkörper diese aneinander-anzupassen.

Die Wälzkörper können getrennt voneinander am Gehäuse montiert sein oder über gemeinsame Achsen miteinander verbunden sein. Sind zumindest zwei Wälzkörper mit einer starren Achse drehfest verbunden, kann eine vorteilhafte Führungseigenschaft des Geräts erreicht werden.

Die Bewegungskenngrößen können direkt über die einzelnen Wälzkörper und/oder über die Achsen der Wälzkörper erfaßt werden. Ist zumindest ein weiterer Wälzkörper mit einer zweiten Achse drehfest verbunden und ist die erste Bewegungskenngröße über die erste Achse und die zweite Bewegungskenngröße über die zweite Achse erfaßbar, kann besonders vorteilhaft über einen Vergleich der Bewegungskenngrößen der beiden Achsen ein Bedienfehler des handgeführten Geräts, wie z.B. ein Abheben wenigstens eines Wälzkörpers von der Fläche des Untersuchungsgegenstands oder ein ungewolltes Verfahren des Gehäuses auf einer Kurvenbahn, erfaßt werden. Ferner können die Führungseigenschaften weiter verbessert werden.

Ist das Gehäuse in zwei bevorzugte, entgegengesetzte Bewegungsrichtungen verfahrbar, und ist über die Sensoreinheit die Bewegungsrichtung bestimmbar, kann bei einem Richtungswechsel ein Wenden des Gehäuses und ein erneutes Ausrichten des Gehäuses vorteilhaft vermieden werden. Ferner kann ein einfaches Ablesen einer Anzeige, insbesondere eines LCD-Bildschirms, am Gehäuse stets gewährleistet werden.

In einer weiteren Ausgestaltung der Erfindung wird vorgeschlagen, daß die bevorzugte Bewegungsrichtung quer zur Längserstreckung des Gehäuses verläuft. Das Gehäuse bzw. das Gerät kann mit einer Meßeinheit, insbesondere mit einer Meßeinheit zur Ortung von Objekten, weit in eine Ecke verfahren und es kann bis weit in die Ecke gemessen werden. Ist das Gerät während eines Meßvorgangs bzw. eines Ortungsvorgangs in zwei entgegengesetzte Richtungen bewegbar, kann das Gerät besonders vorteilhaft in zwei gegenüberliegende Ecken verfahren werden, wobei ein Wenden des Geräts vermeidbar ist. Es ist eine vorteilhafte Eckengängigkeit erzielbar.

Ist im Gehäuse in Längserstreckung des Gehäuses in einem Endbereich wenigstens eine Meßeinheit angeordnet, kann das Gehäuse ferner mit seiner Meßeinheit vorteilhaft nahe entlang einer Ecke verfahren werden.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: ein Ortungsgerät in einer Draufsicht,
- Fig. 2: einen Schnitt entlang der Linie II-II in Fig. 1 und
- Fig. 3: einen Ausschnitt einer Unterseite des Ortungsgeräts aus Fig. 1.

### Beschreibung des Ausführungsbeispiels

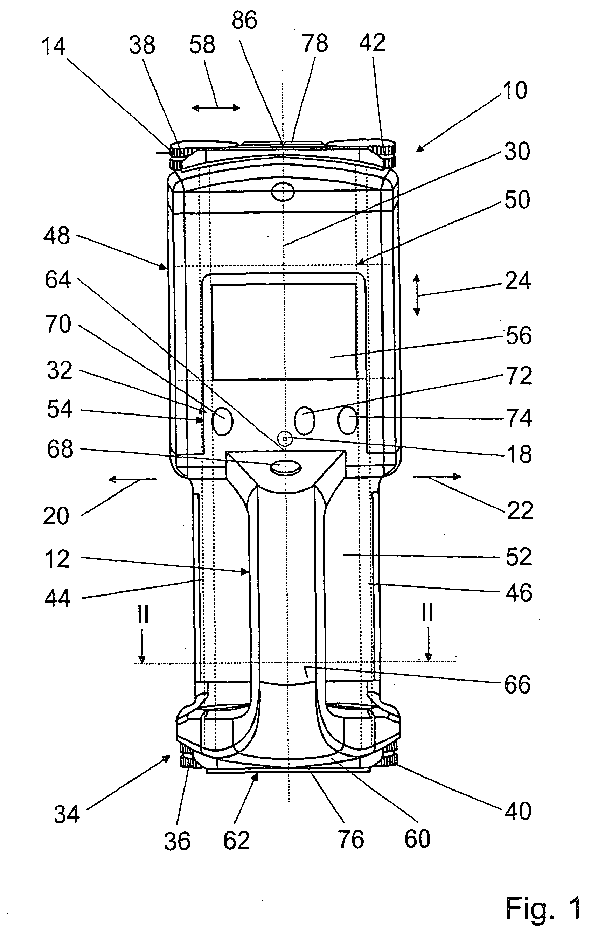

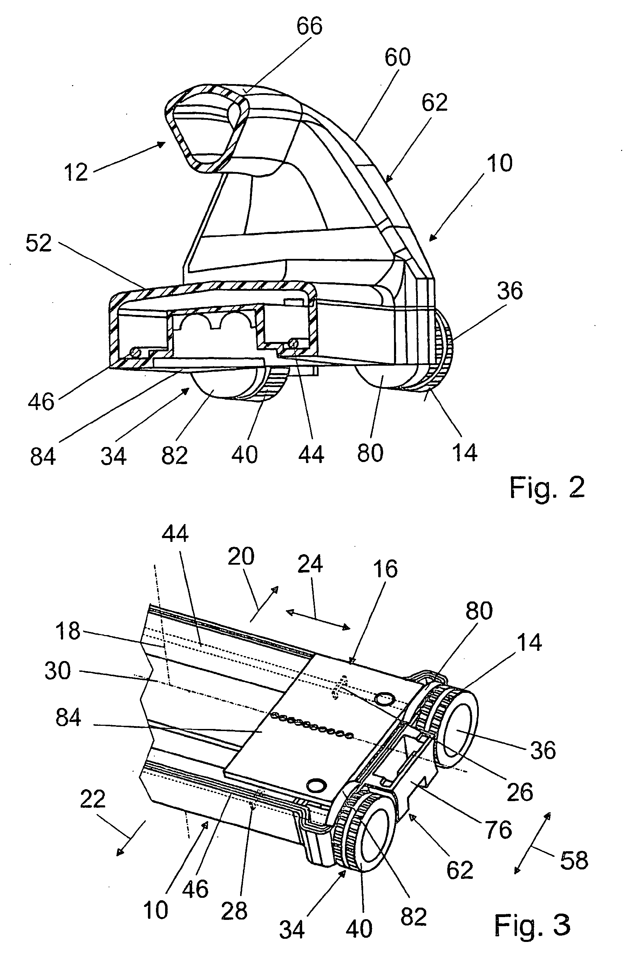

Fig. 1 zeigt ein angeführtes Ortungsgerät mit einem Gehäuse 10 und einem Fahrwerk 34. Das Gehäuse 10 des Ortungsgeräts ist in zwei bevorzugte, entgegengesetzte Bewegungsrichtungen 20, 22 verfahrbar, die senkrecht zu einer Längserstreckung 24 des Gehäuses 10 verlaufen. Das Gehäuse 10 weist an seiner Deckseite 52 eine von einem bügelförmigen Griff gebildete Halteeinheit 12 mit einer Haltefläche 66 auf. Die Halteeinheit 12 verläuft in Längserstreckung 24 des Gehäuses 10 und ist symmetrisch zu einer Ebene ausgebildet, die von einer Längsmittelachse 30 und von einer Normalen der Deckseite 52 aufgespannt ist (Fig. 1). Die Halteeinheit 12 weist eine sich in Richtung der Deckseite 52 verjüngende, diamantförmige Querschnittsfläche auf und geht mit seinem ersten Ende 60, das in Längserstreckung 24 des Gehäuses 10 zu einem Endbereich 62 des Gehäuses 10 weist, in das Gehäuse 10 über, während die Halteeinheit 12 mit seinem zweiten Ende 64 an der Deckseite 52 des Gehäuses 10 mündet (Fig. 1 und 2).

An seinem zweiten Ende 64 weist die Halteeinheit 12 in Längserstreckung 24 in Richtung eines LCD-Bildschirms 56 nach der Haltefläche 66 ein erstes Bedienelement 68 auf (Fig. 1). Nach der Halteeinheit 12 ist in Längserstreckung 24 des Gehäuses 10 in Richtung des LCD-Bildschirms 56, der von einem monochromatischen Bildschirm gebildet ist, jedoch auch von einem Farbbildschirm gebildet sein kann, ein Bedienfeld 54 mit drei Bedienelementen 70, 72, 74 angeordnet, wobei die Bedienelemente 70, 72, 74 in einem Bereich 32 mit einem Radius von ca. 25 mm zum Ende 64 der Halteeinheit 12 angeordnet sind. Ein Bediener kann mit einer Hand das Ortungsgerät über die Halteeinheit 12 führen und gleichzeitig die Bedienelemente 68, 70, 72 und 74 bevorzugt mit seinem Daumen bedienen.

Die Halteeinheit 12 ragt über die Deckseite 52 des Ortungsgeräts und bildet einen Überrollbügel zum Schutz des LCD-Bildschirms 56. Das Ortungsgerät besitzt in Längserstreckung 24 des Gehäuses 10 in einem Endbereich 48, unterhalb des LCD-Bildschirms 56 eine Meßeinheit 50, wobei eine Quererstreckung 58 des Gehäuses 10 im wesentlichen einer Breite der Meßeinheit 50 entspricht, und zwar ca. 100 mm (Fig. 1).

Das Ortungsgerät besitzt vier als Räder ausgebildete Wälzkörper 36, 38, 40, 42, die in Längserstreckung 24 an gegenüberliegenden Stirnseiten 76, 78 in Quererstreckung 58 im äußeren Bereich angeordnet sind (Fig. 1). Denkbar ist auch, das Ortungsgerät nur mit drei Wälzkörpern auszustatten, wobei an einer Stirnseite zwei Wälzkörper und an einer gegenüberliegenden Stirnseite ein einzelner Wälzkörper angeordnet sein können. Die sich jeweils in Längserstreckung 24 gegenüberliegenden Wälzkörper 36, 38, 40, 42 sind über starre Achsen 44, 46 drehfest miteinander verbunden, wobei die starren Achsen 44, 46 durch die Meßeinheit 50 geführt sind.

An einer Unterseite 84 des Gehäuses 10 sind zum Schutz der Wälzkörper 36, 38, 40, 42 Vorsprünge 80, 82 angeformt, die im wesentlichen die Form eines scheibenförmigen Kreissegments aufweisen (Fig. 2 und 3).

Zur Aufnahme von Bewegungskenngrößen weist das Ortungsgerät eine Sensoreinheit 16 mit zwei Sensoren 26, 28 auf, mit denen eine erste und eine zweite Bewegungskenngröße erfaßbar sind (Fig. 3). Die Sensoren 26, 28 der Sensoreinheit 16 sind von optoelektronischen Bauteilen gebildet, und zwar von Gabellichtschranken. Zum Erfassen der Bewegungskenngrößen ist jeweils ein Sensor 26, 28 mit einer Achse 44, 46 des Fahrwerks 34 gekoppelt, so daß die erste Bewegungskenngröße über die erste Achse 44 und die zweite Bewegungskenngröße über die zweite Achse 46 erfaßt werden kann.

Auf die Achsen 44, 46 sind nicht näher dargestellte Segmenträder aufgesteckt, die sich durch die die Sensoren 26, 28 bildenden Gabellichtschranken bewegen. Weisen die Sensoren 26, 28 pro Segmentrad jeweils zwei Lichtschranken mit einem geeigneten Versatz zueinander auf, kann vorteilhaft über eine Phasenlage der beiden Ausgangssignale mit der Sensoreinheit 16 die Bewegungsrichtung 20, 22 mindestens einer Achse des Ortungsgeräts bestimmt werden.

Bewegt ein Bediener das Gehäuse 10 über die Fläche eines Untersuchungsgegenstands, wälzen sich die Wälzkörper 36, 38, 40, 42 des Fahrwerks 34 mit ihren Flächen 14 auf der Fläche des Untersuchungsgegenstands ab. Mit den Wälzkörpern 36, 38, 40, 42 werden die Achsen 44, 46 und mit den Achsen 44, 46 die Segmenträder gedreht.

Die von den Sensoren 26, 28 erfaßten Bewegungskenngrößen bzw. die Drehzahlen der Achsen 44, 46 werden in einer nicht näher dargestellten Auswerteeinheit verglichen, so daß aus den Bewegungskenngrößen auf eine Kenngröße für eine Drehbewegung des Gehäuses 10 um eine Achse 18 geschlossen werden kann, die sich in Richtung der Normalen der Fläche des Untersuchungsgegenstands erstreckt.

Wird beim Bewegen des Ortungsgeräts über einen Untersuchungsgegenstand ein Objekt im LCD-Bildschirm 56 angezeigt, gibt eine Kerbe 86, die an einer Stirnseite 78 des Gehäuses 10 ausgebildet ist, die Position des Objekts im Untersuchungsgegenstand relativ zum Gehäuse 10 an.

### Bezugszeichen

- 10: Gehäuse
- 12: Halteeinheit
- 14: Fläche
- 16: Sensoreinheit
- 18: Achse
- 20: Bewegungsrichtung
- 22: Bewegungsrichtung
- 24: Längserstreckung
- 26: Sensor
- 28: Sensor
- 30: Längsmittelachse
- 32: Bereich
- 34: Fahrwerk
- 36: Wälzkörper
- 38: Wälzkörper
- 40: Wälzkörper
- 42: Wälzkörper
- 44: Achse
- 46: Achse
- 48: Endbereich
- 50: Meßeinheit
- 52: Deckseite
- 54: Bedienfeld
- 56: LCD-Bildschirm
- 58: Quererstreckung
- 60: Ende
- 62: Endbereich
- 64: Ende
- 66: Haltefläche
- 68: Bedienelement
- 70: Bedienelement
- 72: Bedienelement
- 74: Bedienelement
- 76: Stirnseite
- 78: Stirnseite
- 80: Vorsprung
- 82: Vorsprung
- 84: Unterseite
- 86: Kerbe

## Patentansprüche

1. Handgeführtes Ortungsgerät mit einem Gehäuse (10), mit einer Halteeinheit (12), mit einer Sensoreinheit (16) und mit einem Fahrwerk (34), wobei das Gehäuse (10) mit der Halteeinheit (12) über eine Fläche eines Untersuchungsgegenstands bewegbar ist, wobei die Sensoreinheit (16) wenigstens zwei Sensoren (26, 28) aufweist, mit denen eine erste und eine zweite Bewegungskenngröße erfassbar sind, wobei das Fahrwerk (34) eine erste Achse (44) und eine zweite Achse (46) aufweist, die jeweils mit einem der Sensoren (26, 28) gekoppelt sind, so dass die erste Bewegungskenngröße über die erste Achse (44) und die zweite Bewegungskenngröße über die zweite Achse (46) erfasst werden kann, **dadurch gekennzeichnet, dass** die beiden Achsen (44, 46) senkrecht zur Längserstreckung (24) des Gehäuses (10) verlaufen.

2. Gerät nach Anspruch 1, **dadurch gekennzeichnet, daß** aus den erfaßten Bewegungskenngrößen eine Kenngröße für eine Drehbewegung des Gehäuses (10) um zumindest eine Achse (18) ermittelbar ist.

3. Gerät nach Anspruch 1 oder 2, **dadurch gekennzeichnet, daß** die Sensoren (26, 28) zumindest teilweise von elektronischen Bauteilen gebildet sind.

4. Gerät nach Anspruch 3, **dadurch gekennzeichnet, daß** die Sensoreinheit (16) zumindest einen optoelektronischen Sensor (26, 28) aufweist, über den zumindest eine der beiden Bewegungskenngrößen berührungslos von der Fläche des Untersuchungsgegenstands erfaßbar ist.

5. Gerät nach einem der vorhergehenden Ansprüche, **dadurch gekennzeichnet, daß** am Gehäuse (10) ein Fahrwerk (34) mit zumindest einem ersten Wälzkörper (36, 38) angeordnet ist, über den zumindest die erste Bewegungskenngröße erfaßbar ist.

6. Gerät nach Anspruch 5, **dadurch gekennzeichnet, daß** das Fahrwerk (34) zumindest einen zweiten Wälzkörper (40, 42) aufweist, über den zumindest die zweite Bewegungskenngröße erfaßbar ist.

7. Gerät nach Anspruch 5 oder 6, **dadurch gekennzeichnet, daß** zumindest zwei Wälzkörper (36, 38) mit einer ersten Achse (44) drehfest verbunden sind.

8. Gerät nach Anspruch 7, **dadurch gekennzeichnet, daß** zumindest ein weiterer Wälzkörper (40, 42) mit einer zweiten Achse (46)drehfest verbunden ist und die erste Bewegungskenngröße über die erste Achse (44) und die zweite Bewegungskenngröße über die zweite Achse (46) erfaßbar ist.

9. Gerät nach einem der vorhergehenden Ansprüche, **dadurch gekennzeichnet, daß** das Gehäuse (10) in zwei bevorzugte, entgegengesetzte Bewegungsrichtungen (20, 22) verfahrbar und über die Sensoreinheit (16) die Bewegungsrichtung (20, 22) bestimmbar ist.

10. Gerät nach Anspruch 9, **dadurch gekennzeichnet, daß** die bevorzugte Bewegungsrichtung (20, 22) quer zur Längserstreckung (24) des Gehäuses (10) verläuft.

11. Gerät nach Anspruch 10, **dadurch gekennzeichnet, daß** im Gehäuse (10) in Längserstreckung (24) des Gehäuses (10) in einem Endbereich (48) eine Meßeinheit (50) angeordnet ist.

## Claims

1. Hand-operated locating device having a housing (10), having a holding unit (12), having a sensor unit (16) and having running gear (34), wherein the housing (10) can be moved with the holding unit (12) over a surface of an object to be examined, wherein the sensor unit (16) has at least two sensors (26, 28) with which a first and a second movement characteristic variable can be detected, wherein the running gear (34) has a first axle (44) and a second axle (46), which are each coupled to one of the sensors (26, 28), with the result that the first movement characteristic variable can be sensed by means of the first axle (44) and the second movement characteristic variable can be sensed by means of the second axle (46), **characterized in that** the two axles (44, 46) run perpendicularly to the longitudinal extent (24) of the housing (10).

2. Device according to Claim 1, **characterized in that** a characteristic variable for a rotational movement of the housing (10) about at least one axle (18) can be determined from the sensed movement characteristic variables.

3. Device according to Claim 1 or 2, **characterized in that** the sensors (26, 28) are formed at least partially by electronic components.

4. Device according to Claim 3, **characterized in that** the sensor unit (16) has at least one opto-electronic sensor (26, 28) by means of which at least one of the two movement characteristic variables can be sensed in a contactless fashion by the surface of the object to be examined.

5. Device according to one of the preceding claims, **characterized in that** running gear (34) with at least a first rolling body (36, 38) is arranged on the housing (10), by means of which rolling body (36, 38) at least the first movement characteristic variable can be sensed.

6. Device according to Claim 5, **characterized in that** the running gear (34) has at least a second rolling body (40, 42) by means of which at least the second movement characteristic variable can be sensed.

7. Device according to Claim 5 or 6, **characterized in that** at least two rolling bodies (36, 38) are connected in a rotationally fixed fashion to a first axle (44).

8. Device according to Claim 7, **characterized in that** at least one further rolling body (40, 42) is connected in a rotationally fixed fashion to a second axle (46), and the first movement characteristic variable can be sensed by means of the first axle (44), and the second movement characteristic variable can be sensed by means of the second axle (46).

9. Device according to one of the preceding claims **characterized in that** the housing (10) can be moved in two preferred, opposing directions (20, 22) of movement and the direction (20, 22) of movement can be determined by means of the sensor unit (16).

10. Device according to Claim 9, **characterized in that** the preferred direction (20, 22) of movement runs transversally with respect to the longitudinal extent (24) of the housing (10).

11. Device according to Claim 10, **characterized in that** a measuring unit (50) is arranged in the housing (10), in an end region (48) in the longitudinal extent (24) of the housing (10).

## Revendications

1. Appareil de localisation manuel comprenant un boîtier (10), une unité de fixation (12), une unité de capteur (16) et un châssis (34), le boîtier (10) pouvant être déplacé avec l'unité de fixation (12) par le biais d'une surface d'un objet de la recherche, l'unité de capteur (16) présentant au moins deux capteurs (26, 28), avec lesquels une première et une deuxième grandeur caractéristique de déplacement peuvent être détectées, le châssis (34) présentant un premier axe (44) et un deuxième axe (46), qui sont accouplés à chaque fois à l'un des capteurs (26, 28), de telle sorte que la première grandeur caractéristique de déplacement puisse être détectée par le biais du premier axe (44) et que la deuxième grandeur de déplacement puisse être détectée par le biais du deuxième axe (46), **caractérisé en ce que** les deux axes (44, 46) s'étendent perpendiculairement à l'étendue longitudinale (24) du boîtier (10).

2. Appareil selon la revendication 1, **caractérisé en ce que** partant des grandeurs caractéristiques de déplacement détectées, une grandeur caractéristique peut être déterminée pour un mouvement de rotation du boîtier (10) autour d'au moins un axe (18).

3. Appareil selon la revendication 1 ou 2, **caractérisé en ce que** les capteurs (26, 28) sont formés au moins en partie par des composants électroniques.

4. Appareil selon la revendication 3, **caractérisé en ce que** l'unité de capteur (16) présente au moins un capteur opto-électronique (26, 28), par le biais duquel au moins l'une des deux grandeurs caractéristiques de déplacement peut être détectée sans contact par la surface de l'objet de la recherche.

5. Appareil selon l'une quelconque des revendications précédentes, **caractérisé en ce qu'**un châssis (34) muni d'au moins un premier corps de roulement (36, 38) est disposé sur le boîtier (10), par le biais duquel au moins la première grandeur caractéristique de déplacement peut être détectée.

6. Appareil selon la revendication 5, **caractérisé en ce que** le châssis (34) présente au moins un deuxième corps de roulement (40, 42), par le biais duquel au moins la deuxième grandeur caractéristique de déplacement peut être détectée.

7. Appareil selon la revendication 5 ou 6, **caractérisé en ce qu'**au moins deux corps de roulement (36, 38) sont connectés de manière solidaire en rotation à un premier axe (44).

8. Appareil selon la revendication 7, **caractérisé en ce qu'**au moins un corps de roulement supplémentaire (40, 42) est connecté de manière solidaire en rotation à un deuxième axe (46), et la première grandeur caractéristique de déplacement peut être détectée par le biais du premier axe (44) et la deuxième grandeur caractéristique de déplacement peut être détectée par le biais du deuxième axe (46).

9. Appareil selon l'une quelconque des revendications précédentes, **caractérisé en ce que** le boîtier (10) peut être déplacé dans deux directions de déplacement opposées préférées (20, 22), et la direction de déplacement (20, 22) peut être déterminée par le biais de l'unité de capteur (16).

10. Appareil selon la revendication 9, **caractérisé en ce que** la direction de déplacement préférée (20, 22) s'étend transversalement à l'étendue longitudinale (24) du boîtier (10).

11. Appareil selon la revendication 10, **caractérisé en ce que** dans le boîtier (10), dans l'étendue longitudinale (24) du boîtier (10) dans une région d'extrémité (48), est disposée une unité de mesure (50).
